# EUROPÄISCHE PATENTSCHRIFT

(11) **EP 0 956 545 B1**
(45) Veröffentlichungstag und Bekanntmachung des Hinweises auf die Patenterteilung: **04.10.2001**
(21) Anmeldenummer: 97950010.5
(22) Anmeldetag: 22.08.1997
(51) Int. Cl.: G07F 17/42, G07F 7/00, G07C 9/00

(54) **DATENERFASSUNGS- UND DATENSPEICHERMITTELAUSGABESYSTEM, UND VERFAHREN ZUM BETREIBEN DES SYSTEMS**
DATA ACQUISITION AND DATA STORAGE MEDIUM OUTPUT SYSTEM, AND METHOD OF OPERATING THE SYSTEM
SYSTEME DE SAISIE DE DONNEES ET DE SORTIE DE SUPPORTS DE DONNEES, ET MODE DE FONCTIONNEMENT DE CE SYSTEME

(30) Priorität: 10.12.1996 DE 29621439 U
(43) Veröffentlichungstag der Anmeldung: 17.11.1999
(60) Teilanmeldung: 99110189.0
(73) Patentinhaber: Elsdale Limited, St. Helier, Jersey (GB)
(72) Erfinder: KÖSTERKE, Reinhard, D-63768 Hösbach (DE)
(74) Vertreter: Winter, Brandl & Partner
(86) Internationale Anmeldenummer: EP9704583
(87) Internationale Veröffentlichungsnummer: WO9828721

(56) Entgegenhaltungen:
- EP-A- 0 171 380
- WO-A-85/03152
- WO-A-92/17856
- WO-A-93/16447
- DE-A- 3 300 850
- US-A- 4 855 578

## Beschreibung

Die vorliegende Erfindung betrifft ein Datenerfassungs- und Datenspeichermittelausgabesystem zum Erfassen von amtlichen und personenbezogenen Daten für und zum Ausgeben von personalisierten und mobilen Datenspeichermitteln. Weiter betrifft die erfindung ein Verfahren zum Betreiben der vorgenannten Systeme und Vorrichtungen.

Unternehmen erhöhen gerne die Loyalität ihrer Abnehmer indem sie diesen Kundenkarten ausstellen. Hierbei füllt der Abnehmer einen Antrag mit seinen persönlichen Daten und Unterschrift aus. Dieser Vorgang ist eine nicht unerhebliche Hürde, da er auch einige Zeit beansprucht. Auch wird bei der anschließenden zentralen Antragsdateneingabe wegen unleserlicher Schrift, unvollständigen Daten u.a. ein erhöhter Aufwand verursacht. Schließlich muß zwischen dem beauftragenden Unternehmen und den Vertriebsorganisationen sowie zwischen diesen und den Verkaufsberatern vor Ort abgerechnet werden. Eine ebenfalls aufwendige Sache, die oft Klärungsbedarf erfordert.

Hierzu müssen
a) ein Vertrag zwischen Nutzer (Karteninhaber) und Kartenemittent geschlossen,
b) die Vertragsdaten (üblicherweise zentral) erfaßt,
c) die Karten personalisierte und an den Kunden verschickt, und
d) ggf. ein PIN (persönliche Geheimnummer) generiert und ein PIN-Brief (zur Sicherheit getrennt von der Karte) verschickt werden.

Die verschiedenen Teilprozesse:
beim Emittenten
- Logistik von Werbematerial und Anträgen beim Kunden beim Kunden
- Antragsausgabe durch den Kartenemittenten
- Ausfüllen des Antrages durch den Karteninhaber in spe
- Verschicken des Antrages an den Emittenten beim Emittenten
- Lesen und Eingeben der (hoffentlich lesbaren) Anträge in die EDV-Anlage des Emittenten
- Vollständigkeitsprüfung der Anträge beim Emittent
- Nacherfassen bei unvollständigen Anträgen (ca. 25-40%)
- Personalisieren der Karten
- Verpacken und Versenden von Karte und (separat) PIN-Brief

Dieser gesamte Prozeß ist recht kosten- und zeitaufwendig (bis zu 6 Wochen).

In großen Unternehmen und Behörden werden für Mitarbeiter und Besucher Sicherheits- und/oder Mitarbeiter auswe ausgestellt. Dieser Vorgang ist heute noch sehr aufwendig und es vergehen einige Wochen, bis der (neue) Mitarbeiter einen Ausweis in den Händen hält. Den meisten Ausweisen ist eine Zugangsberechtigung und eine Zeiterfassung zugeordnet. Je nach Sicherheitsstufe enthält der Ausweis darüber hinaus verschiedene Sicherheitsmerkmale:
- Unterschrift, Foto und Farben zum Augenscheinvergleich;
- PIN (Vermutung: nur der Berechtigte kennt den PIN);
- biometrische Daten, insbesondere Foto, Stimme, Fingerabdruck, etc. zum maschinellen Vergleich;
- Chip mit Algorithmen (digitale Unterschrift, Private und Public Key);

Das Thema Sicherheit wird in Zukunft wesentlich stärker beachtet werden. Entsprechend werden Sicherheitssysteme und deren Komponenten mehr Beachtung finden müssen.

Einwohnermeldeämter, Sozialämter, Landratsämter Trustcenter (Stellen die in zukunft für die Ausgabe und Verwaltung von Public und Private Keys zuständig sein werden), etc. sind häufig mit der Aufgabe betraut, Ausweise auszustellen oder deren Ausstellung zu veranlassen. Hier werden Daten des Einwohnermeldeamtes oder anderer Stellen auf ein Formular gebracht mit zusätzlichen Komponenten, wie Foto, versehen und zur Ausstellung der gewünschten Auseispapiere weitergeleitet. Auch dieser Vorgang ist zeitaufwendig und kostenintensiv.

Aus der WO-A-9.217.856 ist eine Kreditkartenausgabevorrichtung bekannt, die Kreditkarten vor Ort personalisiert. Der Benutzer muß sich dem Gerät gegenüber mit einer dem vorher bekanntgegebenem Identifikations- oder Legtimationscode (ID) legitimieren. Wsentliche Voraussetzung bei diesem Stand der Technik ist es, daß der Benutzer dem Kartenherausgeber vorher bekannt ist. Ist der Benutzer noch nicht Kunde, erhält er vom Host keine ID und wird somit vom Gerät abgewiesen.

Ausgehend von der WO-A-9.217.856 ist es daher Aufgabe der vorliegenden Erfindung ein Datenerfassungs- und Datenspeichermittelausgabesystem anzugeben, bei dem sich die Datenerfassung für und die Ausgabe von personalisierten und mobilen Datenspeichermitteln, wie Ausweisdokumente, Kundenkarten, Telefonkarten mit und ohne Chip, Geldkarten, und allgemein Chipkarten für verschiedenste Anwendungen, kostengünstiger durchführen läßt und die insbesondere auch für noch nicht bekannte Kunden geeignet ist.

Schließlich ist es auch Aufgabe der Erfindung Verfahren zum Betreiben des Systems bzw. der Datenerfassungsvorrichtung bzw. Verwendungen für System und Vorrichtung anzugeben.

Die Lösung dieser Aufgaben erfolgt durch die Merkmale der Ansprüche 1 bzw. 17.

Das erfindungsgemäße Datenerfassungs- und Datenspeichermittelausgabesystem nach Anspruch 1 umfaßt zwei Hauptkomponenten, nämlich eine Datenerfassungsvorrichtung und eine Datenspeichermittelausgabevorrichtung. Die Datenerfassungsvorrichtung wiederum enthält eine Leseeinrichtung, die wenigstens eine Leseeinheit für amtliche Ausweisdokumente umfaßt. Zusätzlich können noch Leseeinheiten für Scheckkarten bzw. Kreditkarten, usw. vorgesehen sein. Desweiteren ist eine Anzeigevorrichtung, z.B. in Form eines Bildschirms oder eines LCD-Displays und eine Eingabetastatur vorgesehen. Weiter umfaßt die Datenerfassungsvorrichtung eine Steuereinrichtung zur dialoggeführten Eingabe der für die Ausgabe von z. B. einer Kundenkarte notwendigen Daten. Mittels einer Authentifizierungseinrichtung werden die erfaßten Daten und Dokumente, die sowohl über die Leseeinrichtung als auch über die Tastatur eingegeben worden sind, hinsichtlich Athentizität, Kompatibilität und Vollständigkeit überprüft. Die Datenspeichermittelausgabevorrichtung umfaßt eine Schreibeinrichtung zum Beschreiben zweiter mobiler Datenspeichermittel, insbesondere von Karten mit und ohne Chip, Ausweisdokumenten, usw. und eine. Ausgabeeinrichtung zum Ausgeben des mit den erfassten Daten versehenen und damit personalisierten, zweiten, mobilen Datenspeichermittels.

Gemäß einer beror zugten Ausführungsform des Erfindung umfaßt die Datenerfassungsvorrichtung eine Erfassungseinrichtung für biometrische Daten. durch wird überprüft, ob derjenige der personenbezogene Daten eingibt auch diejenige Person ist, die er angibt zu sein. Durch Erfassen des Finger- oder Handflächenabdruckmusters, des Irismusters einer oder beider Augen, durch Aufnahme des Sprachmusters oder durch Abbildung des Gesichts der fraglichen Person und anschließendem Abgleich der erfaßten biometrischen Daten mit zuvor abgespeicherten biometrischen Daten zu der fraglichen Person wird gewährleistet, daß nur die berechtigte Person die jeweiligen mobilen und personalisierten Datenspeichermittel ausgehändigt bekommt.

Gemäß einer bevorzugten Ausgestaltung der Erfindung umfaßt die Leseeinrichtung für die ersten personalisierten und mobilen Datenspeichermittel wenigstens zwei Leseeinheiten für unterschiedliche Datenspeichermittel, z. B. für Personalausweis und Scheckkarte. Dadurch wird die Sicherheit über die Identität der Person und die der Datenerfassung erhöht, da entsprechende Daten von beiden ersten Datenspeichermitteln gegeneinander und gegen anderweitig erfaßte Daten (z. B. Foto auf dem Ausweis und aktuelle Aufnahme) abgeglichen bzw. verglichen werden können.

Bei einer bevorzugten Ausgestaltung der Erfindung gleicht das Datenerfassungs- und Datenspeichermittelausgabesystem von außen einem Fahrkartenautomaten. Der Kunde tritt an das Gerät heran, aktiviert das Gerät mittels der Eingabetastatur und wird dann über Text auf der Anzeigeeinrichtung oder über eine optionale Sprachausgabe (Lautsprecher) aufgefordert, die Art des gewünschten zweiten personalisierten und mobilen Datenspeichermittels, z. B. eine Karte als Monatsfahrkarte, anzugeben. Dann wird er aufgefordert seinen Personalausweis in die dafür vorgesehene Leseeinheit zu schieben und die darauf enthaltenen relevanten Daten werden eingelesen und in der Speichereinrichtung zwischengespeichert. Anschließend oder parallel wird er aufgefordert eine Euroscheckkarte oder eine Kreditkarte in die dafür vorgesehene Leseeinheit zu schieben und wiederum werden die erforderlichen Daten eingelesen. Bei Euroscheckkarten bzw. Kreditkarten wird über die zweite Kommunikationseinrichtung und die Prüfeinrichtung ermittelt, ob die Karte als gestohlen gemeldet oder in sonstiger Weise gesperrt ist. Ist dies der Fall, wird der Vorgang abgebrochen.

Fehlen noch Daten, so wird der Kunde aufgefordert diese per Hand einzugeben. Die eingegebenen Daten und die eingelesenen Daten werden mittels der Prüfeinrichtung auf Konsistenz geprüft. Ist der Erfassungsvorgang abgeschlossen, werden die erfaßten und überprüften Daten mittels der ersten Kommunikationseinrichtung an die Datenspeichermittelausgabevorrichtung übermittelt.

Die Datenspeichermittelausgabevorrichtung kann zusammen mit der Datenerfassungsvorrichtung vor Ort in einem gemeinsamen Gehäuse angeordnet sein, oder aber auch an einem entfernten Ort, z.B. beim Emittenten der Ausweise oder Karten oder einem Dienstleister angeordnet sein. Im. letzteren Fall erfolgt die Übergabe der Daten durch die erste Kommunikationseinrichtung mittels Modem, Datenträgeraustausch etc.

In der Datenspeichermittelausgabevorrichtung wird das vom Kunden gewünschte zweite personalisierte und mobile Datenspeichermittel, z. B. eine (Chip-)Karte oder Ausweis, mit den notwendigen erfaßten und sonstigen Daten beschrieben, ggfs. mit dem relevanten Geldbetrag beladen und dann ausgegeben.

Gemäß einer vorteilhaften Ausgestaltung der Erfindung umfaßt die Schreibeinrichtung unterschiedliche Schreibeinheiten, so daß zum einen die jeweilige (Chip-)Karte beschrieben und beladen werden kann und zum anderen auch PIN-Briefe, Verträge und sonstige Nachrichten ausgegeben werden können.

Für den Fall, daß Datenerfassungsvorrichtung und Datenspeichermittelausgabevorrichtung getrennt voneinander angeordnet sind, ist es vorteilhaft, daß mehrere Kartenerfassungsvorrichtungen funktionell mit einer gemeinsamen Datenspeichermittelausgabevorrichtung, vor Ort oder z.B. beim Emittenten, verbunden sind.

Gemäß einer weiteren vorteilhaften Ausgestaltung der Erfindung kann sowohl die Datenerfassungsvorrichtung als auch die Datenspeichermittelausgabevorrichtung eine Ausgabeeinrichtung für Karten mit und ohne Chip umfassen. Hierbei ist dann sinnvoll, daß die Kartenerfassungsvorrichtung lediglich unpersonalisierte Karten mit und ohne Chip ausgibt, während personalisierte Karten mit und ohne Chip durch die entfernt angeordnete Datenspeichermittelausgabevorrichtung ausgegeben werden und dann an den jeweiligen Kunden verschickt werden. Bei Ausgabe von unpersonalisierten bzw. vorbezahlten Karten ist es vorteilhaft, wenn das erfindungsgemäße System zusätzlich eine Eingabeeinrichtung für Geldscheine oder Münzen umfaßt.

Neben der Bearbeitung von Personendaten und der Ausgabe personalisierter Karten oder Ausweise kann die Vorrichtung über einen zweiten Kartenspeicher auch Karten mit einem festen vorausbezahlten Betrag (analog zu der heutigen Telefonkarte) ausgeben. Wobei diese Karten entweder anonym oder auch personalisiert sein können, um z.B. Ermäßigungen/Berechtigungen für Arbeitslose u.a.m. zu gestatten.

Anspruch 17 betrifft ein Verfahren zum Betreiben des erfindungsgemäßen Systems bzw. die Verwendung des Systems zur Erfassung der Daten für und zur Ausgabe von zweiten Datenspeichermitteln, wie vorausbezahlten Karten (mit und ohne Chip) für Telefon, Verkehrsmittel, Eintrittskarten, usw.

Die übrigen Ansprüche beziehen sich auf weitere vorteilhafte Ausgestaltungen der Erfindung.

Es ist klar, daß die Merkmale der auf die Datenerfassungsvorrichtung gerichteten Ansprüche mit der in dem Datenerfassungs- und Datenspeichermittelausgabesystem enthaltenen Datenerfassungsvorrichtung und umgekehrt kombiniert werden können.

Durch die Erfindung
- wird der Prozeß auf wenige Minuten pro Person verkürzt,
- erhält die Person i.d.R. das zweite Datenspeichermittel sofort und kann es einsetzen,
- können die Aktivitäten z. B. bundesweit beobachtet werden,
- werden die Kosten gegenüber heutigen Verfahren erheblich gesenkt,
- entfallen durch die Identitätsprüfung Risiken wie Antragsbetrug, Transportverlust und Postbetrug.

Allen durch die Erfindung erfaßten Vorgängen ist gemeinsam, daß beabsichtigt ist, die Identität einer bestimmten Person möglichst eindeutig mit einem Medium (zweites Datenspeichermittel) zu verbinden, damit dieses Medium sowohl Menschen über eine Sichtkontrolle vor allem aber Maschinen Sicherheit über die wahre Identität der Person und damit der Richtigkeit der auf dem Medium gespeicherten und auslesbaren bzw. übertragbaren Daten geben kann. Dies wird insbesondere wichtig bei der Anwendung von digitalen Signaturen (Public Key und Privat Key).

Weitere Einzelheiten, Merkmale und Vorteile der Erfindung ergeben sich aus der nachfolgenden Beschreibung beispielhafter Ausführungsformen der Erfindung anhand der Zeichnung.

Es zeigt:
Fig. 1 ein Blockschaltbild einer ersten Ausführungsform der Erfindung,
Fig. 2 ein Blockschaltbild einer zweiten Ausführungsform der Erfindung,
Fig. 3a eine Seitenansicht der Erfindung und
Fig. 3b einen Grundriß des in Fig. 3a dargestellten Geräts.

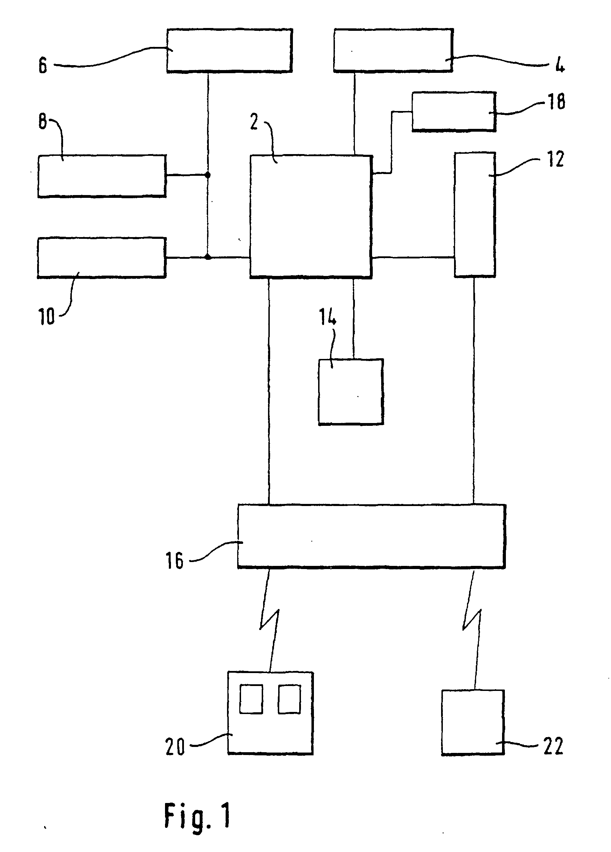

Fig. 1 zeigt das Blockschaltbild einer ersten beispielhaften Ausführungsform der Erfindung mit einer Datenerfassungsvorrichtung 1 und einer Datenspeichermittelausgabevorrichtung 3. Die Datenerfassungsvorrichtung 1 umfaßt eine Steuereinheit 2, die mit einer Eingabeeinrichtung 4 in Form einer Tastatur, einer Anzeigeeinrichtung in Form eines Bildschirmdisplays 6, einer Ausweisleseeinheit 8 und einer Scheckkartenleseeinheit 10 verbunden ist. Des weiteren ist die Steuereinheit 2 mit einer Authentifizierungseinrichtung 12, einer Speichereinrichtung 14 sowie einer Kommunikationseinrichtung 16 verbunden. Steuereinheit 2 ist auch mit einer Erfassungseinrichtung 18 für biometrische Daten, wie Sprachmuster, Irismuster, Fingerabdruckmuster, Foto, etc. verbunden. Die Authentifizierungseinrichtung 12 ist mit der Kommunikationseinrichtung 16 verbunden. Die Kommunikationseinrichtung 16 sind über On-line-Verbindungen mit einer Datenspeichermittelausgabevorrichtung 20 und mit mit einem Zentralrechner 22 der Euroscheckkartenabrechnungszentrale verbunden.

Bei dieser ersten Ausführungsform der Erfindung bzw. bei dieser Grundversion der Erfindung ergibt sich folgender Funktionsablauf:
- (Bildschirm)Text zu rechtlichen Wirksamkeit (Zustandekommen eines Vertrages, wenn Emittent den Antrag annimmt);
- Interessent schiebt seinen Bundespersonalausweis in die dafür vorgesehene Einheit;
- in dieser Einheit werden die Daten des Personalausweises gelesen: Name, Geburtstag + Ort, Adresse, Ausstellungsort, Personalausweisnummer; gegebenenfalls wird der Personalausweis auf Echtheit geprüft;
- der Inhalt wird auf dem Bildschirm dargestellt;
- der Benutzer wird gefragt, ob alles richtig gelesen wurde;
- der Benutzer wird aufgefordert durch Drücken der Bestätigungstaste zu bestätigen,
   - daß die Daten korrekt sind
   - daß er um Zusendung oder sofortige Ausstellung des auf ihn ausgestellten zweiten Datenspeichermittels bittet.

Bei dieser Grundversion wird nur die Datenerfassung durch den Kunden unterstützt. Die erfaßten Daten werden dann entweder über die Kommunikationseinrichtung on-line zum zentralen Haus bzw. zur Datenspeichermittelausgabevorrichtung übermittelt oder die Übermittlung erfolgt mittels Batchmedien (Disketten, Bänder etc.) per Post.

Bei einer nicht näher dargestellten Variante dieser ersten Ausführungsform können auch vorausbezahlte Chip-Karten gekauft werden. Sei es z.B. um die Zeit bis zur Zusendung der nachladbaren und personalisierten Karte zu überbrücken oder sei es, daß der Kunde gar keine personalisierte Karte haben möchte. In diesem Fall wird dialoggeführt folgendes zusätzlich von dem Kunden verlangt:
- *Geldbetrag* wählen *der geladen werden soll*
- *Geld laden über:*
   *a)* - *Geld (Scheine oder Münzen) eingeben oder*
   *b) - Euroscheckkarte eingeben Abfrage:*
      *wieviel möchten Sie laden?*
      *Betrag eingeben: DM*

*Hinweis über Zusatzkosten z*.*B*. *das Laden kostet X% und wird automatisch über Ihr Bankkonto eingezogen.*
- Euroscheckkarte zu ladenden Betrag ggf. autorisieren
- (Chip-)Karte mit dem Betrag laden
- vorausbezahlte (nicht personalisierte) (Chip)Karte ausgeben bzw. entnehmen lassen)

Die auf die vorausbezahlte Karte geladenen Geldbeträge werden an den Host bzw. an die Datenspeichermittelausgabevorrichtung übermittelt und können dann vom jeweiligen Kunden im Lastschriftverfahren bzw. über EC-Cash eingezogen werden.

Bei einer weiteren Variante dieser Grundversion ist vor Ort auch eine Einrichtung vorhanden, die die auszugebenden Karten mit und ohne Chip mit dem Namen des Kunden und ggf. auch einer Kartennummer bedruckt.

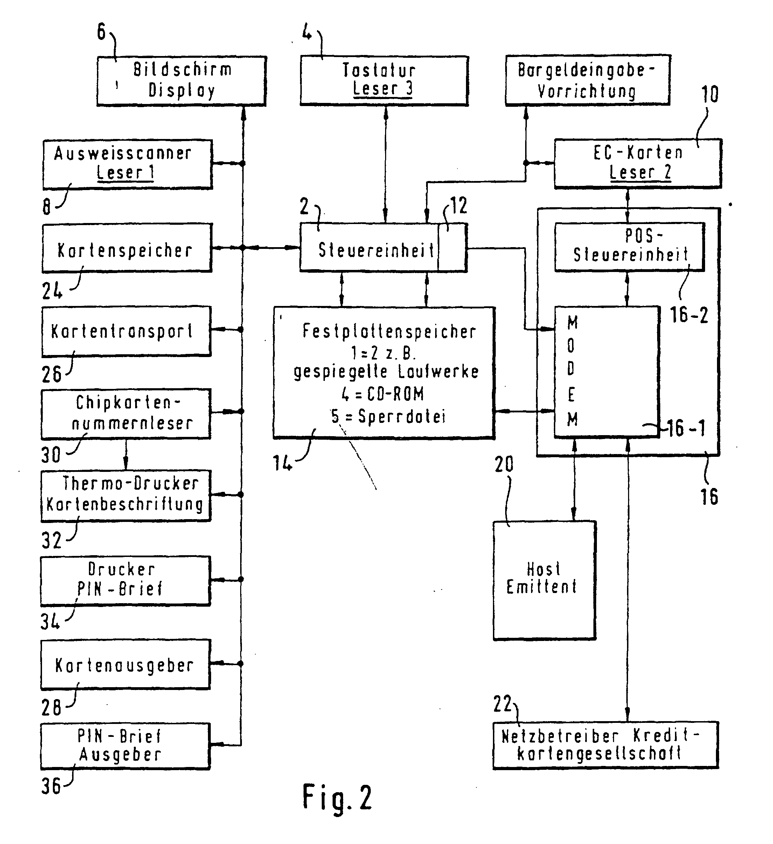

Fig. 2 zeigt das Blockschaltbild einer zweiten beispielhaften Ausführungsform der Erfindung, die Elemente der vorstehend erweiterten Grundversion und der Variationen davon miteinander kombiniert. Zusätzlich zu den Komponenten gemäß Fig. 1 sind hierbei noch folgende Komponenten mit der Speichereinheit 2 verbunden: Ein Kartenspeicher 24, eine Kartentransporteinrichtung 26, eine Kartenausgabeeinrichtung 28, ein Chipkartennummern-Schreib/Leseeinrichtung 30, eine Einrichtung 32 zum optischen Beschriften der Karten mit und ohne Chip z.B. ein Thermodrucker, ein Drucker 34 zum Drucken von PIN-Briefen, und eine PIN-Brief-Ausgabeeinheit 36. Zusätzlich ist noch gezeigt, daß die Kommunikationseinrichtung 16 ein Modem 16-1 und eine POS-Steuereinheit 16-2 umfaßt.

Der wesentliche Unterschied zur Ausführungsform gemäß Fig. 1 besteht darin, daß bei dieser zweiten Ausführungsform unmittelbar nach Eingabe der Daten vor Ort das entsprechend erstellte zweite personalisierte Datenspeichermittel, z. B. eine Karten mit und ohne Chip, ausgegeben werden kann. Über die Authentifizierungseinrichtung 12 im Zusammenspiel mit in der Speichereinrichtung 14 z.B. in Form von CD-ROM abgespeicherten Adressdaten und Sperrdateien für Scheckkarten und Kreditkarten werden die eingegebenen und eingelesenen Daten überprüft. Wird beispielsweise eine Kreditkarte oder eine Scheckkarte eingegeben, die gesperrt ist, wird die Datenerfassung und das Ausgeben einer Karte unterbrochen. Durch die Authentifizierungseinrichtung 12 werden auch die über den Ausweisleser 8 und über den EC- bzw. den Kreditkartenleser 10 eingelesenen Namen und Daten verglichen und bei Abweichung wird eine entsprechende Fehlermeldung ausgegeben. Manuell eingegebene Telefonnummern können auf diese Weise auch mit CD-Rom vorliegenden Telefonnummernverzeichnissen verglichen werden.

Das Abrufen eines bestimmten Geldbetrages über EC-Cash erfolgt folgendermaßen. Über die Anzeige 6 wird der zu ladende Geldbetrag angezeigt ggf. zusätzliche Informationen und die Gebühren für diesen Vorgang. Dann wird der Kunde zur Eingabe seiner PIN-Nummer für die EC-Karte aufgefordert. Die Transaktion wird dann über die OS-Steuereinheit 16-2 und Modem 16-1 durchgeführt und der relevante Geldbetrag kann auf die dem Kunden dann ausgegebene (Chip-)Karte übertragen werden. Beim Laden und Ausgeben der (Chip-)Karte an den Kunden wird zunächst aus dem Kartenspeicher 24 die nächste Karte ausgegeben mit dem Leser 30 wird deren Nummer ermittelt, eine PIN-Nummer zugeordnet und der zuvor erfaßte Datensatz mit Adresse, Name und ggf. Geldbetrag wird dieser Karte zugeordnet und auf die Karte geschrieben. Anschließend wird die PIN-Nummer mittels dem Drucker 34 ausgedruckt und der PIN-Brief und die (Chip-)Karte werden über die Komponenten 28 bzw. 36 ausgegeben. Zusätzlich können die erfaßten Daten natürlich auch an den Host oder Emittenten der Karten mit und ohne Chip 20 übertragen werden.

Bei weiteren vorteilhaften Ausgestaltungen der Erfindung werden anonyme, wiederaufladbare Karten mit und ohne Chip in personalisierte wiederaufladbare Karten umgewandelt. Des weiteren ist es auch möglich, vorausbezahlte Karten mit und ohne Chip in wiederaufladbare Karten umtauschen. Auch können Restbeträge aus z.B. technisch nicht mehr unterstützten alten Karten mit und ohne Chip ausgelesen und in eine neue wiederaufladbare (Chip-)Karte eingelesen werden.

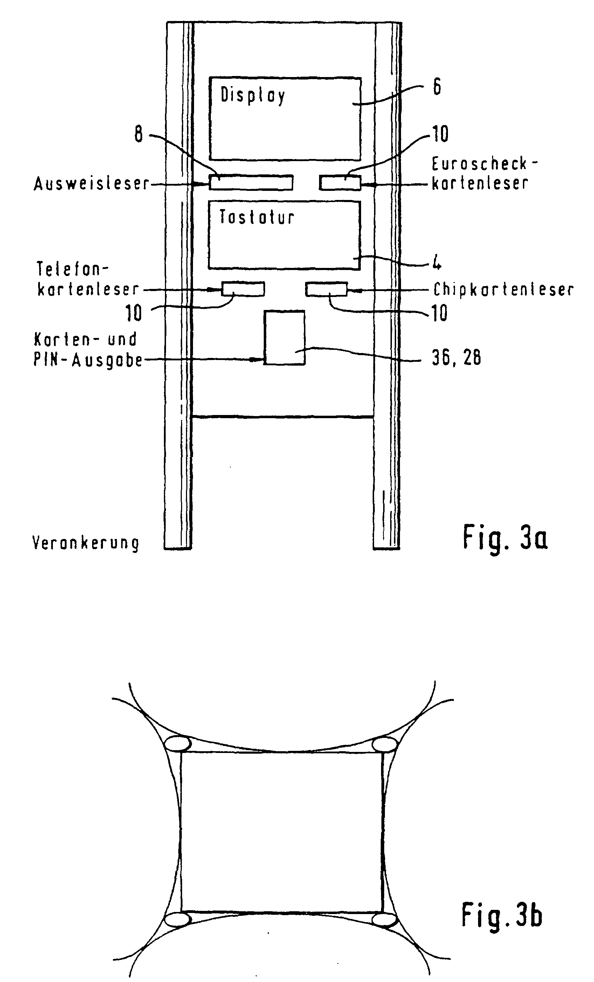

Fig. 3a und 3b zeigen eine beispielhafte Ausgestaltung der in Fig. 2 als Blockschaltbild dargestellten Ausführungsform der Erfindung. Hierbei zeigt Fig. 3b den Grundriß der Vorrichtung und Fig. 3a zeigt eine Seitenansicht mit den von außen zugänglichen Komponenten des erfindungsgemäßen Datenerfassungs- und Datenspeichermittelausgabesystems.

## Patentansprüche

1. Datenerfassungs- und Datenspeichermittelausgabesystem, mit
a) einer Datenerfassungsvorrichtung (1) zum Erfassen von amtlichen und personenbezogenen Daten, die aufweist:
- eine Leseeinrichtung (8, 10) mit wenigstens einer Leseeinheit für erste personalisierte und mobile Datenspeichermittel,
- eine Anzeigeeinrichtung (6),
- eine Eingabeeinrichtung (4) zum manuellen Eingeben von Daten,
- einer Steuereinrichtung (2) zur dialoggeführten Eingabe von bestimmten pesonenbezogenen Daten über die Leseeinrichtung (8, 10) für die ersten personalisierten und mobilen Datenspeichermittel und der manuellen Eingabeeinrichtung (4),
- einer Speichereinrichtung (14) zum Zwischenspeichern der erfaßten personenbezogenen Daten, und
- einer Authentifizierungseinrichtung (12) zum Überprüfen der erfassten personenbezogenen Daten auf Authentizität,
b) und einer Datenspeichermittelausgabevorrichtung (3), die mit der Datenerfassungsvorrichtung (1) verbunden ist, und die aufweist:
- eine Schreibeinrichtung (20) zum Beschreiben von zweiten personalisierten und mobilen Datenspeichermitteln mit den erfaßten personenbezogenen Daten, und
- eine Ausgabeeinrichtung (20) für die beschriebenen zweiten personalisierten und mobilen Datenspeichermittel, **dadurch gekennzeichnet,**
**daß** die wenigstens eine Leseeinheit der Leseeinrichtung (8, 10) eine Leseeinheit für amtliche Ausweisdokumente ist.

2. System nach Anspruch 1, **gekennzeichnet durch** wenigstens eine Kommunikationseinrichtung (16) zum Online-Dialogverkehr mit Dritten.

3. System nach Anspruch 1 oder 2, **dadurch gekennzeichnet, daß** die Schreibeinrichtung (20) Schreibeinheiten (32, 34) für verschiedene zweite mobile Datenspeichermittel umfaßt.

4. System nach einem der vorhergehenden Ansprüche, **dadurch gekennzeichnet, daß** die Leseeinrichtung (8,10) neben der Ausweisleseeinheit eine Scheck-und/oder Kreditkartenleseeinheit umfaßt.

5. System nach einem der vorhergehenden Ansprüche, **dadurch gekennzeichnet, daß** die Leseeinrichtung (8,10) eine Leseeinheit für Karten mit und ohne Chip umfaßt.

6. System nach einem der vorhergehenden Ansprüche, **dadurch gekennzeichnet, daß** jeweils eine Mehrzahl von Datenerfassungsvorrichtungen (1) mit einer gemeinsamen Datenspeichermittelausgabevorrichtung (3) verbunden sind.

7. System nach einem der vorhergehenden Ansprüche, **dadurch gekennzeichnet, daß** die wenigstens eine Datenerfassungsvorrichtung (1) und die Datenspeichermittelausgabevorrichtung (3) räumlich voneinander getrennt angeordnet sind, und **daß** die wenigstens eine Datenerfassungsvorrichtung (1) über die Kommunikationseinrichtung (16) mit der Datenspeichermittelausgabevorrichtung (3) verbunden ist.

8. System nach Anspruch 7, **dadurch gekennzeichnet, daß** die wenigstens eine Kommunikationseinrichtung (16) ein On-Line-Verbindung zwischen Datenerfassungsvorrichtung (1) und Datenspeichermittelausgabevorrichtung (3) umfaßt.

9. System nach Anspruch 7, daß die wenigstens eine Kommunikationseinrichtung (16) ein Lese-/Schreibeinrichtung für mobile Datenspeichermittel umfaßt.

10. System nach einem der vorhergehenden Ansprüche, **dadurch gekennzeichnet, daß** die Datenerfassungsvorrichtung (1) wenigstens eine Einrichtung zum Lesen und Schreiben von Karten mit und ohne Chip umfaßt.

11. System nach Anspruch 10, **dadurch gekennzeichnet, daß** die Datenerfassungsvorrichtung (1) eine Einrichtung zum Ausgeben von Karten mit und ohne Chip umfaßt.

12. System nach Anspruch 10 oder 11, **dadurch gekennzeichnet, daß** die Datenerfassungsvorrichtung (1) eine Einrichtung zum Eingeben und Erfassen von Zahlungsmitteln umfaßt.

13. System nach einem der vorhergehenden Absprüche, **dadurch gekennzeichnet, daß** die Authentifizierungseinrichtung (12) zum Überprüfen der erfaßten personenbezogenen Daten durch Abgleich der über die Leseeinrichtung (7, 10) für erste personalisierte Datenspeichermittel eingelesenen Daten mit über die manuelle Eingabeeinrichtung (4) eingegebenen Daten und /oder mit Daten aus externen Datenbanken dient.

14. System nach Anspruch 13, **dadurch gekennzeichnet, daß** die Authentifizierungseinrichtung (12) mit der Kommunikationseinrichtung (16) verbunden ist, und **daß** mittels der Authentifizierungseinrichtung (12) die über die Leseeinrichtung (8, 10) gelesene erste personalisierte und mobile Datenspeichermittel bezüglich Sperrvermerken überprüfbar sind.

15. System nach einem der vorhergehenden Ansprüche, **gekennzeichnet durch** eine Erfassungseinheit (18) zum Erfassen biometrischer Daten, insbesondere von Fingerabdruckmuster, Irismuster, individuelles Sprachmuster und/oder Bild des Gesichtes einer Person.

16. System nach einem der vorhergehenden Ansprüche, **dadurch gekennzeichnet, daß** die zweiten personalisierten und mobilen Datenspeichermittel Karten mit und ohne Chip, amtliche Ausweisdokumente und oder Kundenkarten sind.

17. Verfahren zum Erfassen von personenbezogenen Daten für und zum Ausgeben von zweiten Datenspeichermitteln, insbesondere in Form von Ausweisdokumenten oder Karten mit und ohne Chip, mittels einem System nach einem der vorhergehenden Ansprüche, mit den Verfahrensschritten:
a1) Eingeben eines amtlichen Ausweisdokuments einer Person in die Leseeinrichtung (8, 10) für erste personalisierte und mobile Datenspeichermittel;
a2) Einlesen der für die zweiten Datenspeichermittel relevanten Daten von dem amtlichen Ausweisdokument;
b) Überprüfen der erfassten Daten auf Vollständigkeit, Konsistenz und Authentizität durch die Authentifizierungseinrichtung;
c) Dialoggeführte Nachfrage bei der Person über Anzeige- und manuelle Eingabeeinrichtung (6, 4) bezüglich fehlender oder widersprüchlicher Daten;
d) Übermitteln der erfaßten und überprüften Daten an die Datenspeichermittelausgabevorrichtung (3);
e) Beschreiben des zweiten Datenspeichermittels mit den relevanten Daten; und
f) Ausgeben des beschriebenen zweiten Datenspeichermittels an die Person.

18. Verfahren nach Anspruch 17, **gekennzeichnet durch** die weiteren Verfahrensschritte:
a3) Eingeben einer Scheck- oder Kreditkarte der Person in die Leseeinrichtung (8, 10) für erste personalisierte und mobile Datenspeichermittel; und
a4) Einlesen der für die zweiten Datenspeichermittel relevanten Daten von der Scheckkarte oder der Kreditkarte;

19. Verfahren nach Anspruch 18, **dadurch gekennzeichnet, daß** bei den in Schritt a3) erfaßten Daten auch PIN-Daten enthalten sind, und **daß** diese PIN-Daten überprüft werden.

## Claims

1. A data recording and data memory means issuing system having
a) a data recording apparatus (1) for recording official and personal data, which has:
- a read device (8, 10) having at least one read unit for first personalized and mobile data memory means,
- a display device (6),
- an input device (4) for manually inputting data,
- a control device (2) for dialogue-controlled inputting of specific personal data via the read device (8, 10) for the first personalized and mobile data memory means and the manual input device (4),
- a memory device (14) for buffer storage of the recorded personal data, and
- an authentication device (12) for checking the recorded personal data for authenticity,
b) and a data memory means issuing apparatus (3),which is connected to the data recording apparatus (1) and which has:
- a write device (20) for writing the recorded personal data to second personalized and mobile data memory means, and
- an issuing device (20) for the second personalized and mobile data memory means which have been written to, **characterized in that**
the at least one read unit of the read device (8, 10) is a read unit for official identity documents.

2. The system as claimed in claim 1, **characterized by** at least one communications device (16) for on-line dialogue traffic with third party.

3. The system as claimed in claim 1 or 2, **characterized in that** the write device (20) comprises write units (32, 34) for various second mobile data memory means.

4. The system as claimed in one of the preceding claims, **characterized in that** the read device (8, 10) in addition to a check card and/or credit card read unit comprises an identity card read unit.

5. The system as claimed in one of the preceding claims, **characterized in that** the read device (8, 10) comprises a read unit for cards with and without a chip.

6. The system as claimed in one of the preceding claims, **characterized in that** a plurality of data recording apparatuses (1) are in each case connected to a common data memory means issuing apparatus (3).

7. The system as claimed in one of the preceding claims, **characterized in that** the at least one data recording apparatus (1) and the data memory means issuing apparatus (3) are arranged physically separately from one another, and that the at least one data recording apparatus (1) is connected via the communications device (16) to the data memory means issuing apparatus (3).

8. The system as claimed in claim 7, **characterized in that** the at least one communications device (16) comprises an on-line connection between the data recording apparatus (1) and the data memory means issuing apparatus (3).

9. The system as claimed in claim 7, **characterized in that** the at least one communications device (16) comprises a read/write device for mobile data memory means.

10. The system as claimed in one of the preceding claims, **characterized in that** the data recording apparatus (1) comprises at least one device for reading and writing to cards with and without a chip.

11. The system as claimed in claim 10, **characterized in that** the data recording apparatus (1) comprises a device for issuing cards with and without a chip.

12. The system as claimed in claim 10 or 11, **characterized in that** the data recording apparatus (1) comprises a device for inputting and recording payment means.

13. The system as claimed in one of the preceding claims, **characterized in that** the authentication device (12) is used for checking the recorded personal data by matching the data read via the read device (7, 10) for the first personalized data memory means to data input via the manual input device (4) and/or to data from external databases.

14. The system as claimed in claim 13, **characterized in that** the authentication device (12) is connected to the communications device (16), and that the first personalized and mobile data memory means, which are read via the read device (8, 10), can be checked, looking for a non-negotiability notice, via the authentication device (12).

15. The system as claimed in one of the preceding claims, **characterized by** a recording unit (18) for recording biometric data, in particular fingerprint pattern, iris pattern, individual voice pattern and/or the image of a person's face.

16. The system as claimed in one of the preceding claims, **characterized in that** the second personalized and mobile data memory means are cards with and without a chip, official identity documents and/or customer cards.

17. A method for recording official and personal data for and for issuing second data memory means, in particular in the form of identity card documents or cards with and without a chip, by means of a system as claimed in one of the preceding claims, having the following method steps:
a1) inputting an official identity card document for a person into the read device (8, 10) for first personalized and mobile data memory means;
a2) reading from the official identity card document the data which are relevant for the second data memory means;
b) checking the recorded data for completeness, consistency and authenticity by means of the authentication device;
c) dialogue-controlled questioning of the person via the display and manual input device (6, 4) with regard to missing or contradictory data;
d) transmitting the. recorded and checked data to the data memory means issuing apparatus (3);
e) writing the relevant data to the second data memory means; and
f) issuing the second data memory means which have been written to, to the person.

18. The method as claimed in claim 17, **characterized by** the further method steps:
a3) inputting a check card or credit card for the person into the read device (8, 10) for first personalized and mobile data memory means; and
a4) reading from the check card or the credit card the data which are relevant for the second data memory means.

19. The method as claimed in claim 18, **characterized in that** the data recorded in step a3) also include PIN data, and that these PIN data are checked.

## Revendications

1. Système de saisie de données et d'édition de moyens formant mémoire de données, comportant:
a) un dispositif de saisie de données (1) servant à saisir des données officielles et liées à une personne, et qui comporte:
- un dispositif de lecture (8, 10) comportant au moins une unité de lecture de premiers moyens de mémoire de données personnalisés et mobiles,
- un dispositif d'affichage (6),
- un dispositif d'introduction (4) pour l'introduction manuelle de données,
- un dispositif de commande (2) pour l'introduction, pilotée en mode dialogué, de certaines données liées à la personne par l'intermédiaire du dispositif de lecture (8, 10) pour les premiers moyens personnalisés et mobiles formant mémoire de données, et le dispositif d'introduction manuelle (4),
- un dispositif de mémoire (14) pour la mémorisation intermédiaire des données saisies, liées à une personne; et
- un dispositif d'authentification (12) pour vérifier l'authenticité des données saisies liées à la personne,
b) et un dispositif (3) d'édition de moyens formant mémoire de données, qui est relié au dispositif de saisie de données (1) et qui comporte:
- un dispositif d'écriture (20) pour écrire des données saisies, liées à une personne, dans des seconds moyens personnalisés et mobiles formant mémoire de données, et
- un dispositif de sortie (20) pour les seconds moyens personnalisés et mobiles formant mémoire de données, dans lesquelles ont été inscrites des données,
**caractérisé en ce**
**que** la au moins une unité de lecture du dispositif de lecture (8, 10) est une unité de lecture de documents d'identité officiels.

2. Système selon la revendication 1, **caractérisé par** au moins un dispositif de communication (16) pour un trafic de dialogue en ligne avec des tiers.

3. Système selon la revendication 1 ou 2, **caractérisé en ce que** le dispositif d'écriture (20) comprend des unités d'écriture (32, 34) pour différents seconds moyens formant mémoire de données mobiles.

4. Système selon l'une des revendications précédentes,
**caractérisé en ce que** le dispositif de lecture (8, 10) comprend, en dehors d'une unité de lecture de documents d'identité officiels, une unité de lecture de cartes-chèques et/où de cartes de crédit.

5. Système selon l'une des revendications précédentes,
**caractérisé en ce que** le dispositif de lecture (8, 10) comprend une unité de lecture de cartes avec et sans puce.

6. Système selon l'une des revendications précédentes,
**caractérisé en ce que** respectivement une multiplicité de dispositifs de saisie de données (1) sont reliés-à un dispositif commun de sortie (30) des moyens formant mémoire de données.

7. Système selon l'une des revendications précédentes,
**caractérisé en ce que** le au moins un dispositif de saisie de données (1) et le dispositif (3) d'édition de moyens formant mémoire de données sont disposés en étant séparés dans l'espace et que le au moins un dispositif de saisie de données est relié par l'intermédiaire du dispositif de communication (16), au dispositif (3) d'édition des moyens formant mémoire de données.

8. Système selon la revendication 7, **caractérisé en ce que** le au moins un dispositif de communication (16) comprend une liaison en ligne entre le dispositif de saisie de données (1) et le dispositif (3) d'édition des moyens formant mémoire de données.

9. Système selon la revendication 7, **caractérisé en ce que** le au moins un dispositif de communication (16) comprend un dispositif de lecture/écriture pour des moyens mobiles formant mémoire de données.

10. Système l'une des revendications précédentes, **caractérisé en ce que** le dispositif de saisie de données (1) comprend au moins un dispositif pour effectuer une lecture de, et une écriture sur, des cartes avec et sans puce.

11. Système selon la revendication 10, **caractérisé en ce que** le dispositif de saisie de données (1) comprend un dispositif pour délivrer des cartes avec et sans puce.

12. Système selon la revendication 10 ou 11, **caractérisé en ce que** le dispositif de saisie de saisie de données (1) comprend un dispositif pour introduire et saisir des moyens de paiement.

13. Système selon l'une des revendications précédentes,
**caractérisé en ce que** le dispositif d'authentification (12) sert à contrôler les données saisies, liées à une personne, par comparaison des données saisies par l'intermédiaire du dispositif de lecture (7, 10) pour des premiers moyens personnalisés formant mémoire de données, à des données introduites par l'intermédiaire du dispositif d'introduction manuelle (4) et/ou à des données provenant de banques de données externes.

14. Système selon la revendication 13, **caractérisée en ce que** le dispositif d'authentification (12) est relié au dispositif de communication (16), et que la présence de marques de blocage sur les premiers moyens personnalisés et mobiles formant mémoire de données, lus par l'intermédiaire du dispositif de lecture (8, 10) peut être contrôlée au moyen du dispositif d'authentification (12).

15. Système selon l'une des revendications précédentes,
**caractérisé par** une unité de saisie (18) servant à saisir des données biométriques, notamment les empreintes digitales, la configuration de l'iris,. un modèle de langage individuel et/ou l'image du visage d'une personne.

16. Système selon l'une des revendications précédentes,
**caractérisé en ce que** les seconds moyens personnalisés et mobiles formant mémoire de données, sont des cartes avec et sans puce, des documents d'identité officiels ou des cartes de clients.

17. Procédé pour saisir des données liées à une personne, pour délivrer des seconds moyens formant mémoire de données, notamment sous la forme de documents d'identité ou de cartes avec ou sans puce, au moyen d'un système selon l'une des revendications précédentes, comprenant les étapes suivantes:
a1) introduction d'un document d'identité officiel d'une personne dans le dispositif de lecture (8, 10) pour des premiers moyens personnalisés et mobiles formant mémoire de données;
a2) lecture des données du document d'identité officiel, qui sont importantes pour les seconds moyens formant mémoire de données; et
b) contrôle des données saisies, vérification par le dispositif d'authentification de l'état complet, de l'uniformité et d'authenticité des données saisies;
c) interrogation, pilotée en mode dialogué, auprès d'une personne par l'intermédiaire d'un dispositif d'affichage et d'un dispositif d'entrée manuelle (6, 4) concernant des données manquantes ou contradictoires;
d) transmission des données saisies contrôlées au dispositif de sortie (3) des moyens formant mémoire de données;
e) écriture des données concernées dans les seconds moyens formant mémoire de données; et
f) édition des seconds moyens formant mémoire de données, dans lesquels une inscription a été faite, à la personne.

18. Procédé selon la revendication 17, **caractérisé par** les étapes suivantes consistant à:
a3) introduire une carte-chèque ou une carte de crédit de la personne dans le dispositif de lecture (8, 10) pour les premiers moyens personnalisés et mobiles formant mémoire de données;
b4) lecture des données importantes pour les seconds moyens formant mémoire de données, à partir de la carte de paiement ou de la carte-chèque.

19. Procédé selon la revendication 18, **caractérisé en ce que** les données saisies lors de l'étape a3), incluent également des données d'identification personnelles PIN et que ces données PIN sont contrôlées.
